Europäisches Patentamt

European Patent Office

Office européen des brevets

(19)

(11) Publication number: **0 076 365**
**A1**

(12) # EUROPEAN PATENT APPLICATION

(21) Application number: **82106114.0**

(22) Date of filing: **08.07.82**

(51) Int. Cl.³: **H 01 B 12/00**

(30) Priority: **02.10.81 IT 2426581**

(43) Date of publication of application:
**13.04.83 Bulletin 83/15**

(84) Designated Contracting States:
**CH DE FR GB LI NL SE**

(71) Applicant: **ALLUMINIO ITALIA S.p.A.**
**Piazza Marconi No. 25**
**I-00144 Roma-Eur(IT)**

(72) Inventor: **Fiorini, Paolo**
**Via Fauser 4**
**I-28100 Novara(IT)**

(72) Inventor: **Pitto, Gino**
**Via Fauser 4**
**I-28100 Novara(IT)**

(74) Representative: **Ferri, Antonio**
**c/o BREVETTI EUROPA S.r.l. Piazza Bernini 6**
**I-20133 Milano(IT)**

(54) **Power superconducting cables.**

(57) Power superconducting cables comprising a plurality of multifilamentary composite superconducting elements, assembled with one another by stranding on a copper core having an inside hole (for the circulation of liquid helium) and hole seats, helically arranged on the outer wall of said core, in which said superconducting elements are housed, tightly compacted, in said seats, such elements being furthermore protected and kept pressed against said core by an outer copper sheath.

FIG.1

EP 0 076 365 A1

"Power Superconducting Cables"

This invention relates to multifilamentary composite power superconducting cables.

## Background of the invention

It is known that for technologically advanced electrotechnical applications - in particular for example coils for large superconducting magnets and rotors for big turbo-alternators - where it is necessary to carry high currents in high-intensity magnetic fields, it is technically and economically convenient to have recourse to power superconducting cables.

Technologically advanced power superconducting cables are, for example, the ones consisting of a certain number of "superconducting elements" assembled with one another by stranding, each of said superconducting elements being composed by a plurality of superconducting filaments stabilized in a copper matrix. Said superconducting elements are more completely defined by the term "multifilamentary" in relation to said plurality of filaments, and by the term "composite" in relation to said copper matrix, which must exert a "stabilization" function as copper is a conductor capable of providing a secondary way to short filament sections, if any, which may undergo a transition from the superconducting state to the normal state as a consequence of local temperature increases. (It is known that the superconducting state is typical of very low temperatures).

Said superconducting filaments have diameters of the order of 10-40 microns, and are generally composed by Nb-Ti alloys at 40-52% of Ti (% expressed by weight), since said alloy exhibits the following typical features: it is easy to produce, it is superconducting in itself (i.e. it does not need any specific heat treatments to become superconducting) and highly plastic, and therefore easily transformable, by means of the usually known plastic processings (such as extrusion, cold-rolling and drawing) into the filaments forming the abovesaid superconducting elements.

In relation to the aforesaid characteristics, the superconducting elements based on the utilization of filaments consisting of said alloy (or of an alloy having analogous characteristics) are also easily assemblable with one another by "stranding" (thus forming the above-mentioned power cables) chiefly since the superconducting characteristics of said Nb-Ti alloy are not adversely affected by mechanical workings and do not need, for being developed (as already explained hereinbefore), any heat treatments after the chemical forming of the alloy itself.

The stranding of said superconducting elements is therefore usually accomplished on a metallic support to which said elements are tin brazed in order to render the desired power cable mechanically reliable from both a static and dynamic viewpoint. The so stranded superconducting elements are then inserted into a metallic coating in order to impart improved mechanical resistance properties to said power cable (obtaining furthermore proper spacings between cable and coating for the circulation of liquid helium when the abovesaid support is not provided with a specific inner hole).

It is apparent that the aforesaid stranding, tin brazing and coating involve thermomechanical treatments which can be carried out when utilizing, for the superconducting filaments involved, said Nb-Ti alloy and the like, while the same treatments are not applicable if one should desire to use, for the same purpose, a few intermetallic compounds of crystallographic group A-15, such as for example $Nb_3Al$: this compound, in fact, along with significantly higher superconducting characteristics than the ones of the abovesaid Nb-Ti alloy, exhibits the serious drawback of being very brittle, wherefore it is practically impossible to obtain it in the form of superconducting filaments and elements stranded with one another by means of plastic and mechanical processings: by consequence its chemical forming shall be obtained only at the conclusion of the power cable manufacturing cycle, through a diffusion thermal treatment at 800-1000°C between its two constituents Nb and Al physically coupled from the beginning to the end of the entire manufacturing cycle of the abovesaid superconducting elements and relevant stranding and coating cited hereinbefore.

It is apparent that the above-mentioned diffusion thermal treatment at high temperature is incompatible with the above-cited tin-brazing stranding process, and that, more generally, said stranding technology is employable only when the superconducting filaments of the power cables in question consist of metal alloys which possess the desired superconducting characteristics already before said stranding/brazing operation (and which are capable of retaining them also after plastic and mechanical processings), and which, in any case, do not require high-temperature thermal treatments after the above-mentioned stranding/brazing operation.

The power cables based on the use of superconducting elements with filaments made of said Nb-Ti alloy can operate in magnetic fields of the order of 6-8 teslas (1 tesla = $10^4$ gausses). For applications in higher magnetic fields it is indispensable to employ, for said filaments, materials having higher superconducting characteristics, such as, for example, the above-cited intermetal compound $Nb_3Al$, for which - as already explained - the above-illustrated stranding technology is not applicable for the purposes of manufacturing the power cables in question.

What told hereinbefore with regard to $Nb_3Al$ also applies to other compounds of said chrystallographic group A 15, for example $Nb_3Sn$.

## Summary of the invention

Thus, it is an object of the present invention to provide power superconducting cables consisting of multifilamentary composite superconducting elements, stranded without brazing on a metallic core and endowed with high characteristics of electrical and mechanical, static and dynamic reliability.

This and still other objects, which will more clearly appear to a technician skilled in the art from the following description, are achieved by a cable which comprises

- a plurality of multifilamentary composite superconducting elements assembled by stranding on a metal core having an inner longitudinal hole, intended for the circulation of liquid helium, as well as hole seats arranged parallelly to one another and longitudinally helically developing on the outer wall of said core, in which seats said superconducting elements are individually housed in close interface contact with such seats,

- an external metal sheath enclosing said so stranded superconducting elements, said sheath being forced against said elements and against said core, such elements being highly compacted in the corresponding above-mentioned seats.

### Description of the preferred embodiment

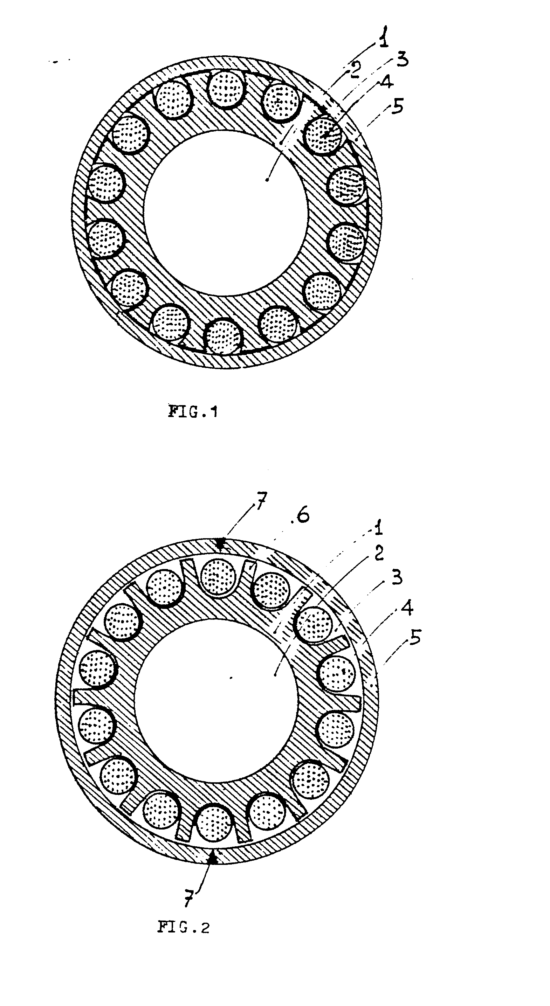

A preferred, but non-exclusive embodiment of the present invention is hereinafter described making reference to the foregoing and to figure 1 of the only drawing attached hereto and being an integrant part of the present description.

Said figure schematically shows, for illustrative purposes, an enlarged cross section of the cable in question; in this figure the numerals indicate :

- 1 : the metallic core, made of copper
- 2 : the inner hole in said core, intended for the circulation of liquid helium
- 3 : the hole seats housing the superconducting elements
- 4 : the superconducting elements
- 5 : the outer copper sheath.

According to the present invention, the number of superconducting elements 4 and of the corresponding hole seats 3 varies as a function of the applicative requirements: for example, for a 6-tesla, 6000 A cable, the number of superconducting elements and of corresponding hole seats is usually 12.

The screw pitch according to which hole seats 3 develop on the wall of core 1 ranges from 25 to 50 cm.

The dimensions of core 1 and the thickness of sheath 5 are selected, by a technician skilled in the art, in accordance with the complexity and the utilization of the cable object of this invention.

The core and sheath copper is at a high purity degree, preferably it is electrolytic copper.

Elements 4 are of the multifilamentary composite type, with filaments stabilized in a copper matrix, said filaments being prepared from a coupled Nb/Al material, in which Nb and Al retain their atomic identity till the conclusion of the mechanical processes for manufacturing said elements 4 and for assembling same by stranding and coating in order to form the power cable of the invention.

The forming of superconducting intermetallic compound $Nb_3Al$ within said filaments by diffusion between Nb and

- 7 -

0076365

Al, which are the constituents thereof, is caused (by diffusion at about 850°C) when the abovesaid cable has no longer to be subjected to any plastic processing, and preferably when said cable has already undergone the winding operation to form, for example, a coil of a superconducting magnet: in such manner said $Nb_3Al$ compound - which is very brittle -thoroughly and perfectly retains all its chemical, physical and morphological properties.

Elements 4 may be advantageously produced (in like manner as is described hereinbefore with regard to coupled Nb/Al filaments) also with filaments consisting of a coupled Nb/ Al-Ge alloy material from which, by diffusion thermal treatment, intermetallic compound $Nb_3Al_{0.8}Ge_{0.2}$ (of crystallographic group A 15) is obtained, which, as is known, possesses the highest superconducting characteristics known so far.

More generally, the present invention can be advantageously practiced by utilizing elements 4 formed by filaments of said crystallographic group A 15, such as $Nb_3Sn$, or also by other filaments consisting of Nb-Ti alloys and the like: in the latter case, the advantages of this invention reside chiefly in the high mechanical reliability of the corresponding power cable and in the technological simplification of the process for obtaining same.

### Example

From the example of embodiment hereinafter described, and given for merely illustrative and not limitative

purposes, it is still better apparent how the cable of the present invention is made and also how it can be manufactured.

Said example makes reference to figures 1 and 2 of the enclosed above-mentioned drawing, wherein in figure 2 (which schematically shows,for illustrative purposes, an enlarged cross-section of the cable at an intermediate stage of its manufacture) numerals 1, 2, 3, 4 and 5 indicate the same components as in figure 1, and

- 6     indicates the fins of the hole seats in the shape they exhibit prior to the last plastic processings which impart to the power cable its final geometric form (as explained later herein),

- 7     indicates the weld beads of the two copper semitubes constituting outer sheath 5.

The example described herein refers to the manufacture of a power superconducting cable (outside diameter = 16.1 mm) composed by 14 superconducting elements 4 with circular section (outside diameter = 1.71 mm), each of them consisting of 61 filaments (diameter = 110-140 microns), essentially made of intermetallic compound $Nb_3Al$, stabilized in a copper matrix. Each of said 14 elements is obtained by the process described in Italian patent No. 1,004,408 of July 10, 1976, namely substantially and conceptually as follows :

- two strips of Nb and Al are coupled by superimposition, and the bimetallic strip so obtained is wound around a copper core (wire diameter : 6 mm), thus obtaining a coil which, in its turn, is inserted into a copper cylindric container. The Cu/Al-Nb composite article so obtained is transformed, by plastic processing, into a monofilamentary cable of hexagonal section, from which 61 cable sections are cut, which in their turn are assembled and inserted into a second cylindrical copper container having a hexagonal central hole; the resulting multifilamentary composite article is transformed, by plastic processing, into the desired circular-section "superconducting element", consisting of 61 filaments of coupled Nb-Al material, in which filaments the relevant components Nb and Al still retain their atomic identity and the thereto connected good plastic properties which permit their further mechanical workings, necessary to carry out the technological cycle for the manufacturing of the power cables of the invention, as is described hereinbelow with reference to said figure 2.

Fourteen superconducting elements obtained according to the technique illustrated hereinabove are assembled with one another by stranding - by means of a known mechanized technique - by inserting said elements into 14 hole seats 3 of semicircular section with fins 6 machined on the outer wall of a copper core 1 obtained (by means of extrusion) with the geometry represented in cross section in figure 2 and with helical longitudinal development with a pitch equal to 30 cm.

The sizes of said hole seats correspond to those of the above-mentioned superconducting elements, with minimum allowances in excess, sufficient for the insertion of such elements into their respective seats. The above-cited cables so stranded are sheathed with two copper semitubes, which are successively electrowelded to their longitudinal interfaces 7 to form a sheath 5 enveloping stranded cables 4: the resulting manufactured article consisting of said stranded and sheathed cables is then subjected to drawing - according to a conventional technique - whereby the pressing of fins 6 against superconducting elements 4 as well as the intense adhesion-compression of sheath 5 against superconducting elements 4 and core 1 are achieved, thus obtaining, finally, a multifilamentary composite power superconducting cable exhibiting the geometry shown in section in figure 1, and possessing high characteristics of electrical and mechanical, static and dynamic reliability.

By winding said cable, No. 6 coils for compact superconducting magnets are manufactured, which, once formed in their final configuration, are subjected to a thermal treatment at 850°C that causes the forming of intermetallic compound $Nb_3Al$ by diffusion between Nb and Al which constitute the filaments of which superconducting elements 4 are made. As is known, it is said compound that - at the temperatures of liquid helium - displays high superconducting characteristics.

From the preceding description and example the advantages of the present invention are clearly apparent, the same being synthetically summarizable as follows :

- high mechanical, static and dynamic characteristics;

- high reliability of the above-cited mechanical and electrical characteristics;

- technological manufacturing easiness.

The present invention can be practiced with technically equivalent modifications and variations, falling however within the inventive concept of the invention.

## Reference cited

Italian Patent n° 1 004 408 of July 10,1976

"Power Superconducting Cables"

## Claims

1.    Power superconducting cables endowed with high electrical characteristics and a high mechanical reliability, consisting of a plurality of multifilamentary composite superconducting elements assembled with one another by stranding, characterized in that

- said superconducting elements are stranded on a metallic core provided with a longitudinal inner hole, for the circulation of a coolant, and with hole seats arranged parallel to one another and with longitudinal helical development on the outer wall of said core, in such seats being individually housed said superconducting elements in close interface contact with said seats,

- said so stranded superconducting elements are enveloped  by a metallic sheath forced against said elements and against said core, the elements themselves being tightly compacted within the above-mentioned relevant hole seats,

- said core and said sheath are made of a metallic material having a melting point not lower than 800°C.

2.    Power superconducting cables according to claim 1, characterized in that said sheats and/or said core are made of copper.

3.    Power superconducting cable according to claims 1 and 2, characterized in that the section of said hole seats is selected from amongst a substantially circular section, a substantially square section, a substantially rectangular section and a substantially trapezoidal section.

4.    Power superconducting cables according to claims 1 to 3, characterized in that said superconducting elements are composed by a plurality of superconducting filaments substantially consisting of intermetallic compound $Nb_3Al$ stabilized in a copper matrix.

5.    Power superconducting cables according to claims 1 to 3, characterized in that said superconducting elements are composed by a plurality of superconducting filaments substantially consisting of intermetallic compound $Nb_3Sn$ stabilized in a copper matrix.

6.    Power superconducting cables according to claims 1 to 3, characterized in that said superconducting elements are composed by a plurality of superconducting filaments substantially consisting of intermetallic compound $Nb_3Al_{0.8}Ge_{0.2}$ dispersed in Nb stabilized in a copper matrix.

7.    Power superconducting cables according to claims 1 to 3, characterized in that said superconducting elements are composed by a plurality of superconducting filaments substantially consisting of a Nb-Ti alloy having a Ti content ranging from 40 to 52%
by weight.

FIG.1

FIG.2

**0076365**

Application number

**EUROPEAN SEARCH REPORT**

European Patent Office

## DOCUMENTS CONSIDERED TO BE RELEVANT

EP 82106114.0

| Category | Citation of document with indication, where appropriate, of relevant passages | Relevant to claim | CLASSIFICATION OF THE APPLICATION (Int. Cl. ³) |
|---|---|---|---|
| | US - A - 3 686 750 (WOOLCOCK et al.) | | H 01 B 12/00 |
| X | * Fig. 1,6; column 2, lines 17-43; column 3, lines 27-41 * | 1-3,7 | |
| Y | * Fig. 1,6; column 2, lines 17-43; column 3, lines 27-41 * | 4-6 | |
| | -- | | |
| Y | DE - A1 - 2 511 656 (ALUMETAL) | 4 | |
| | * Page 4, lines 6-29 * | | |
| | & US-A-4 003 762 | | |
| D | & IT-A-1 004 408 | | |
| | -- | | |
| Y | US - A - 3 996 662 (HAUCK et al.) | 5,6 | |
| | * Column 1, lines 12-27 * | | |
| | ---- | | TECHNICAL FIELDS SEARCHED (Int. Cl. ³) |
| | | | H 01 B 12/00 |
| | | | H 01 L 39/00 |

The present search report has been drawn up for all claims

| Place of search | Date of completion of the search | Examiner |
|---|---|---|
| VIENNA | 09-12-1982 | KUTZELNIGG |